# EUROPEAN PATENT APPLICATION

(11) **EP 2 472 779 A1**
(43) Date of publication of application: **04.07.2012**
(21) Application number: 10197342.8
(22) Date of filing: 30.12.2010
(51) Int. Cl.: H04L 12/24, H04L 12/56, H04Q 11/00

(54) **Method for data communication networks and system**

(71) Applicant: Nokia Siemens Networks Oy, 02610 Espoo (FI)
(72) Inventor: Sfeir, Elie, 80333, München (DE); Margaria, Cyril, 81547, Munich (DE)

(57) **Abstract**

A system for data communication networks and a method for data communication networks, the data communication network including a label switch path, the method comprising the steps of providing a list including a plurality of entries, wherein each entry includes a wavelength that can be used by the label switch path for recovery procedures.

## Description

### FIELD OF THE INVENTION

The invention relates to data communication networks and protocols, in particular it refers to control plane architectures and protocols for optical transport networks.

### BACKGROUND OF THE INVENTION

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

### IETF: Internet Engineering Task Force

The IETF (Internet Engineering Task Force) standard RFC 4872 defines the procedures and RSVP-TE (Resource Reservation Protocol - Traffic Engineering) signaling extensions for end-to-end LSP recovery which is described in RFC 4426

The GMPLS (Generalized Multi Protocol Label Switching) end-to-end LSP recovery procedures are also defined in RFC 4872.

The shared-mesh restoration scheme allows multiple backup LSPs (Label Switch Path) to share network resources when the working LSPs that they protect are physically disjoint. The working LSP resources are reserved and committed in the data plane, while the backup LSP resources are only reserved, but not committed to the data plane. The resources along the backup LSP are committed to the data plane only with further signalling, i.e. after the occurrence of a transport plane failure and restoration signalling triggered by the ingress node. When a backup LSP is activated (due to a transport plane failure on the working LSP), the network resources are activated and are no longer available for use by the other backup LSPs sharing the same resource.

In SDH TDM (Synchronous Digital Hierarchy - Time Division Multiplex) networks, it is usual that nodes can switch timeslots from ingress to egress ports without constraints. It is thus common that the timeslot on a link is locally assigned by the upstream node and can be different on each link. For shared-mesh restoration LSPs, the resource is allocated locally at every transit node and possibly shared with other backup LSPs. When a backup LSP is activated, the shared resource is no longer available for the backup LSPs using the shared resource. Furthermore, the resource on the affected link(s) is re-allocated and possibly re-shared with other backup LSPs. This is possible due to the flexibility of SDH TDM systems. In most cases, resource reallocation is done locally and does not require end-to-end signalling nor ingress intelligence, and all backup LSPs are available again.

In OTN (Optical Transport Network) WDM (Wavelength Division Multiplex) networks, a resource is a wavelength or lambda, and the system has usually more constraints. Most important, an OCh (Optical Channel) LSP (Label Switch Path) has the same wavelength end to end, for the whole LSP (i.e. the same lambda is switched at each node). The lambda is usually decided during the planning phase or by the ingress and is set for the complete path. It can however be different for the working and backup LSPs. The transit nodes do not have the possibility to change a lambda.

The disadvantages are the following:
- The lambda sharing decision is not a local decision but rather decided during planning or by the ingress.
- When a backup LSP is activated
   - The affected backup LSPs (which are no longer available because the shared resource is used) can not be locally re-allocated and re-shared (as in SDH TDM).
   - The affected backup LSPs must be re-signaled end to end with a new lambda, which increases the intelligence required at ingress and makes resource usage optimization more difficult.

The problem to be solved is to overcome the disadvantages stated above and in particular to provide method of optimization of lambda resource usage in OTN WDM networks in case a set of backup OCh LSPs are no longer available due to the activation of the shared lambda.

### SUMMARY OF THE INVENTION

In order to overcome the above-described need in the art, the present invention discloses a method for data communication networks, the data communication network including a label switch path, the method comprising the steps of providing a list including a plurality of entries, wherein each entry includes a wavelength that can be used by the label switch path for recovery procedures.

In a next embodiment of the invention, each entry further includes a plurality of parameters including the weight of the wavelength or the sharing degree of the wavelength or the status of the wavelength.

It is also an embodiment that the list of entries is ordered in ascending order of preference.

In a further embodiment, the order of preference is generated by a planning tool or by a network operator.

In a next embodiment, the method further comprises the step of signaling each entry of the list in both upstream and downstream direction.

It is also an embodiment that each entry is signaled during a path setup.

In a next embodiment, each entry is signaled periodically by means of refresh messages.

It is also an embodiment that entry is signaled upon specific network events, preferably during network failures.

In a further embodiment, a network operator generates the list.

In a next embodiment, the method further comprises the step of updating the list.

In a further embodiment, the order of the plurality of entries is updated.

In a further embodiment, a parameter included in one entry of the plurality of entries is updated

The problem stated above is also solved by a system for data communication networks, comprising: a label switch path, means for generating a list including a plurality of entries, wherein each entry includes a wavelength that can be used by the label switch path for recovery procedures.

The method, and the system provided, in particular, bears the following advantages:
a) They solve the lambda usage optimization problem in an elegant and distributed manner.
b) They achieve reduction in capital expenditure (CAPEX) optimizing bandwidth utilization in the network.
c) They are easy to implement.

### BRIEF DESCRIPTION OF THE DRAWINGS

The invention is explained by way of example in more detail below with the aid of the attached drawings.
Fig. 1 is a schematic representation of the lambda list object format, according to one embodiment of the invention.
Fig. 2 is a schematic representation of the lambda list entry format, according to one embodiment of the invention.
Fig. 3 is a schematic representation of a sample network topology, according to one embodiment of the invention.
Fig. 4 is a schematic representation of signalling during W1 and P1 creation, according to one embodiment of the invention.
Fig. 5 is a schematic representation of signalling during W2 and P2 creation, according to one embodiment of the invention.
Fig. 6 is a schematic representation of signalling during W3 and P3 creation, according to one embodiment of the invention.
Fig. 7 is a schematic representation of signalling during P1 activation, according to one embodiment of the invention.
Fig. 8 is a schematic representation of Signalling during P2 lambda list re-signalling, according to one embodiment of the invention.
Fig. 9 is a schematic representation of Signalling during P3 lambda list re-signalling, according to one embodiment of the invention.

### DESCRIPTION OF THE INVENTION

Illustrative embodiments will now be described with reference to the accompanying drawings to disclose the teachings of the present invention. While the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

According to an embodiment of the invention, for each backup LSP to be provisioned, the network operator (possibly with the help of a planning tool) provides an explicit route (list of nodes/hops) and optionally a list of possible lambdas which are optically feasible. In WDM OTN networks, it is common that not all lambdas are optically feasible for a given route or path.

According to an alternative embodiment of the invention, the route and list of possible lambdas for the backup LSP may be calculated by the ingress node and not required from the operator.

According to an alternative embodiment of the invention, the list may specify the possible lambdas that can be used by this LSP if the current lambda is no longer available, i.e. in case another shared backup LSP has been activated.

It is also an embodiment that each entry in the lambda list may consist of a lambda and optionally a set of parameters including weights, utilization or sharing degree, lambda status, etc...

In a further embodiment, the list of lambdas may be ordered in ascending order of preference. The order can be generated by the planning tool, the operator or the ingress node.

In a next embodiment, the lambda list may be signaled for backup LSPs in both downstream and upstream directions during the path setup, on periodic refresh messages, upon specific network events (such as the establishment or tear-down of services, network failures, etc...) and upon request from any node along the LSP path.

In an alternative embodiment, the lambda list order and parameter set can be modified by any node along the LSP path depending on local policy and other criteria (such as the lambda sharing degree). The decision may involve information from other backup LSPs transiting the node. Moreover, the control plane can be actively involved in the sharing optimization decision.

In a next embodiment, the updated lambda list signaled upstream to the ingress node ma be ordered, and its parameters updated by downstream nodes to optimize the lambda sharing for the given LSP.

It is also an embodiment that the LSP ingress node keeps track of the lambda list and updates it according to the list signaled upstream.

In a next embodiment, only one lambda may be signaled and reserved during the LSP setup. This "initial" lambda could be provided as the first element in the lambda list, or as a separate lambda.

In a further embodiment, when a backup shared LSP is activated:
- All other backup LSPs which share the activated lambda (called hereafter affected LSPs) become unavailable. The ingress nodes of all affected LSPs are notified according to existing procedures in RFC4872. However, a new error code/value "backup LSP resource unavailable" could be provided instead of the generic error code/value "Notify Error/LSP Locally Failed" for the notification sent when a shared resource is no longer available for a backup LSP.
- The ingress nodes re-signal the affected LSPs using the next available lambda in the respective ordered lambda list. The new signaled lambda can be shared with other backup LSPs. The lambda list is thus re-signaled and updated by the downstream nodes, based on the new network state resulting from the network event.

The invention may relate to the following phases of shared-mesh LSPs provisioning and restoration in GMPLS controlled optical networks:
- Working and backup LSP setup
- Local sharing information buildup
- Lambda list signaling and update
- Backup LSP activation following a network failure
- Affected LSPs re-signaling using new resource

The exemplary invention implementation is based on OCh LSP signaling and the RSVP signaling protocol but is not restricted to those.

### Lambda list format

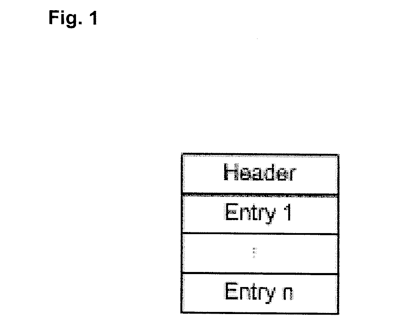

A new signaling object is provided, the lambda list object, with the format shown in Figure 1. It consists of a header followed by an ordered list of lambda list entries (or simply lambda entries). The list order can be modified by nodes along the LSP path.

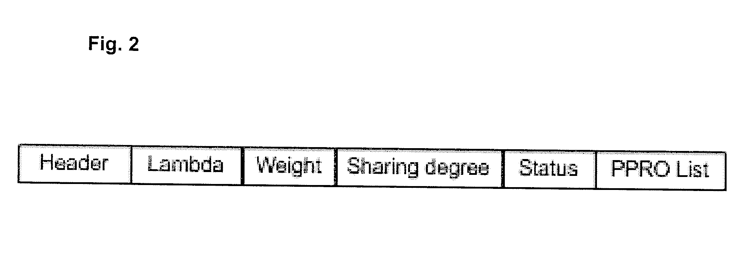

The lambda list entry object can be also defined with the format shown in Figure 2. It may consist of a header, lambda, weight, sharing degree and status fields among others. The lambda field identifies the frequency, wavelength or lambda. The weight field can be updated by nodes along the LSP path to reflect a preferred lambda. The sharing degree field can be updated by nodes along the LSP path to reflect, for example, the potential sharing degree of the lambda. The status field indicates the status of the wavelength (for example whether it can be used, whether it is used, whether it is shared, etc...). . The PPRO (Primary Path Route Object) list contains the paths of the respective working connections (this information can be useful for further optimization decision at the ingress).

### Local sharing information

The local sharing information can be used by a node to modify the lambda list order and update the lambda list entries, especially the weight, sharing degree and status, in order to reflect a preference for one or more lambdas. The local sharing information gathering can be achieved to a certain extent by inspecting the lambda list objects carried in signaling, or more generally via distribution using a routing protocol for instance. The decision to prefer a lambda to another is usually policy based and can depend on many factors. In the following examples, it is assumed for simplicity that sharing shall be maximized (in terms of number of sharing LSPs) whenever possible.

### Exemplary implementation and procedures

The exemplary implementation defines the following procedures according to an embodiment of the invention:
1. A transit node receiving a Path message for a backup LSP:
   a. Processes the message as usual.
   b. Updates its local sharing information, possibly from the lambda list object content.
   c. Forwards the lambda list unmodified on the Path message downstream.
2. An egress node receiving a Path message for a backup LSP:
   a. Processes the message as usual.
   b. Updates its local sharing information, possibly from the lambda list object content.
   c. Modifies the lambda list order and updates the lambda list entries content (such as weight, sharing degree, status, etc...) based on its local sharing information.
   d. Forwards the updated lambda list on the Resv message upstream.
3. A transit node receiving a Resv message for a backup LSP:
   a. Processes the message as usual.
   b. Modifies the lambda list order and updates the lambda list entries content (such as weight, sharing degree, status, etc...) based on its local sharing information.
   c. Forwards the updated lambda list on the Resv message upstream.
4. An ingress node receiving a Resv message for a backup LSP:
   a. Processes the message as usual.
   b. Modifies the lambda list order and updates the lambda list entries content (such as weight, sharing degree, status, etc...) based on its local sharing information.
   c. Updates its local sharing information from the modified lambda list. At this stage, the received lambda list reflects the preference of all nodes along the path regarding the sharing of signaled lambdas.
5. Optionally, a node detecting a change in its local sharing information for a given lambda notifies the ingress nodes of all affected LSPs using an RSVP Notification with a new error code/value "local sharing information changed" (If the node is itself the ingress, the notification is local). The affected LSPs have each an entry in their lambda list for the lambda for which the local sharing information has changed. This may happen for example when a new backup LSP is signaled (or an existing one deleted) with one or more lambdas which are already signaled in the lambda list of other backup LSPs. This step is optional as the lambda list needs to be updated anyways before re-signaling an LSP with a new lambda (see points 6 and 7 below). However, this step can optimize the results in specific cases.
6. An ingress node receiving a Notification message with error code/value "local sharing information changed" for a backup LSP:
   a. Processes the message as usual (standard processing of RSVP notifications).
   b. Based on local policy, may send a Path message downstream with the original lambda list, triggering the downstream nodes to update the lambda list on the Resv message based on their updated local sharing information. A Resv message with the updated lambda list is then received by the ingress and processed as described above.
   c. The ingress node may decide, based on local policy or configuration, to delay sending the Path message downstream (using a timer for example). This makes sense if multiple Notifications are expected to be received at ingress.
7. An ingress node receiving a Notification message with error code/value "backup LSP resource unavailable" for a backup LSP (this notification is sent according to RFC4872 when a backup LSP is no longer available because its shared resource has been activated by another backup LSP. A new error code/value "backup LSP resource unavailable" is provided instead of the generic error code/value "Notify Error/LSP Locally Failed"):
   a. Processes the message as usual (standard processing of RSVP notifications).
   b. Based on local policy, may execute step 6 above, equivalent to receiving a Notification message with error code/value "local sharing information changed for a backup LSP". This triggers an update of the lambda list.
   c. Based on local policy, may re-signal the backup LSP with the next available lambda in the lambda list. The new signaled lambda can be shared with other backup LSPs. This may in turn trigger re-signaling of all affected LSPs to update the lambda list based on the new network state and local sharing information (point 5 above).

The notification in point 7 is sent to the ingress nodes of all affected LSPs after a backup LSP has been activated following a network failure for example (making the shared resource no longer available for the other backup LSPs). The backup LSP activation procedure is described in RFC4872.

### Worked example

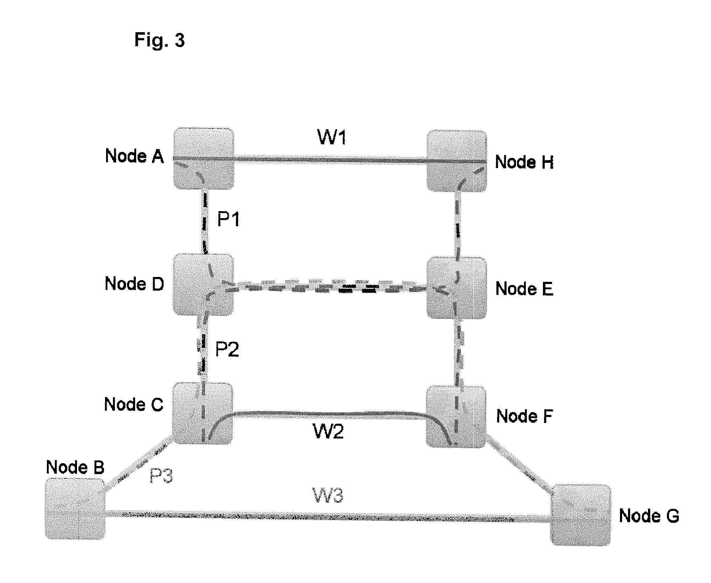

Figure 3 shows an example of network topology where all nodes are OCh switching capable and all links are assumed to be WDM links.

The following OCh services are preplanned, using a planning tool for example:
- Service 1:
   ○ Ingress is A, egress is H
   ○ Working connection:
      ■ Path: A-H
      ■ Lambda: irrelevant
   ○ Backup connection:
      ■ Path: A-D-E-H
      ■ Lambda: x
      ■ Pre-calculated lambda list: 1, 3
- Service 2:
   ○ Ingress is C, egress is F
   ○ Working connection:
      ■ Path: C-F
      ■ Lambda: irrelevant
   ○ Backup connection:
      ■ Path: C-D-E-F
      ■ Lambda: x
      ■ Pre-calculated lambda list: 1, 2, 3
- Service 3:
   ○ Ingress is B, egress is G
   ○ Working connection:
      ■ Path: B-G
      ■ Lambda: irrelevant
   ○ Backup connection:
      ■ Path: B-C-D-E-F-G
      ■ Lambda: x
      ■ Pre-calculated lambda list: 2, 3

The initial lambda for all 3 backup connections is the same (value x), and can thus be shared on common links as the respective working connections are disjoint. The pre-calculated lambda lists specify the possible lambdas that can be used by a backup path if needed (for example if the shared resource is no longer available).

For simplicity in this example only the "lambda" and "weight" fields of the defined lambda list entry will be considered. The weight field shall denote the sparing potential for the specific lambda, in terms of number of lambdas that can be saved on an outgoing link. Furthermore, only the weight can be used as a preference criteria (a higher weight means higher lambda preference) and the lambda list is not ordered in this example. In case of identical weights, the lower lambda is preferred.

In this example, the following scenario is considered:
1. Services creation
2. Activation of a backup connection after a network failure
3. Re-signaling of the affected LSP with new lambdas, according to the updated lambda list

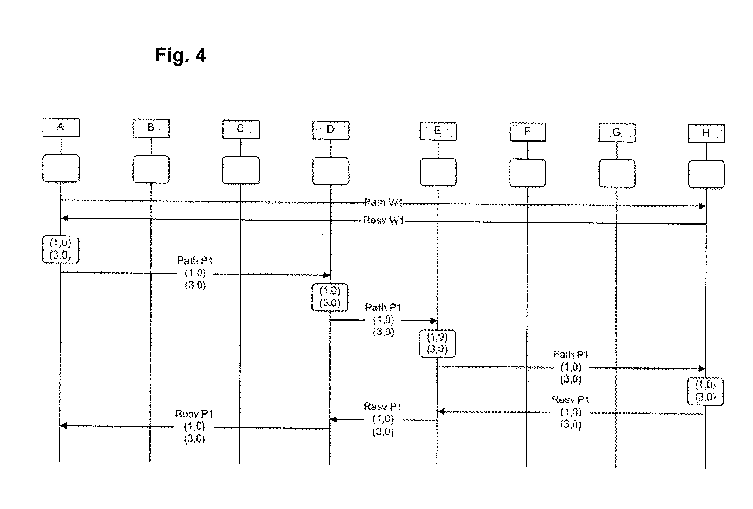

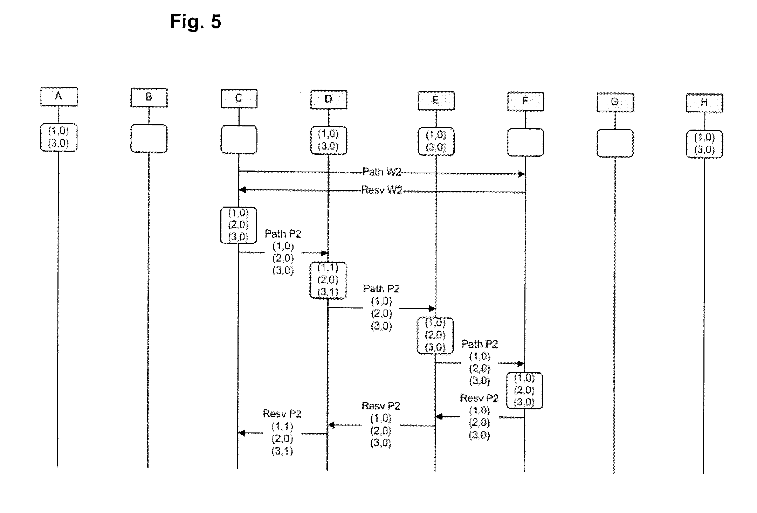

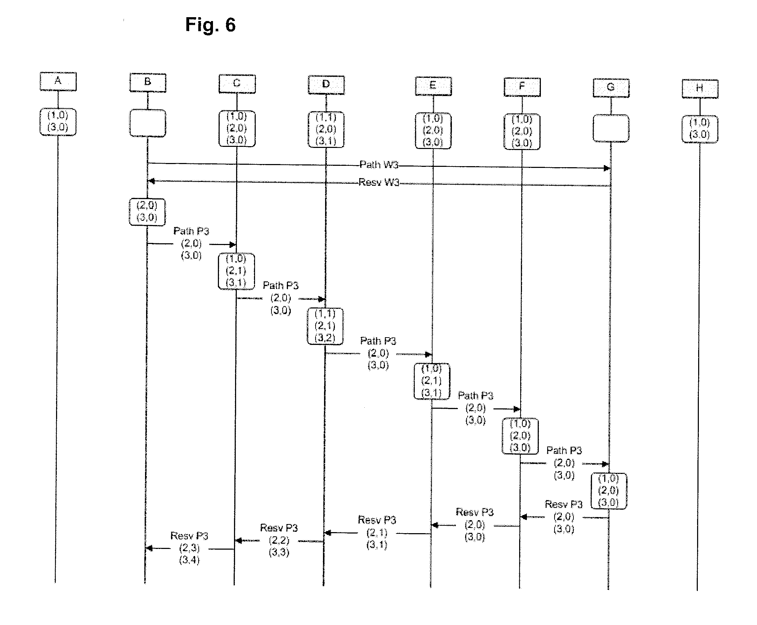

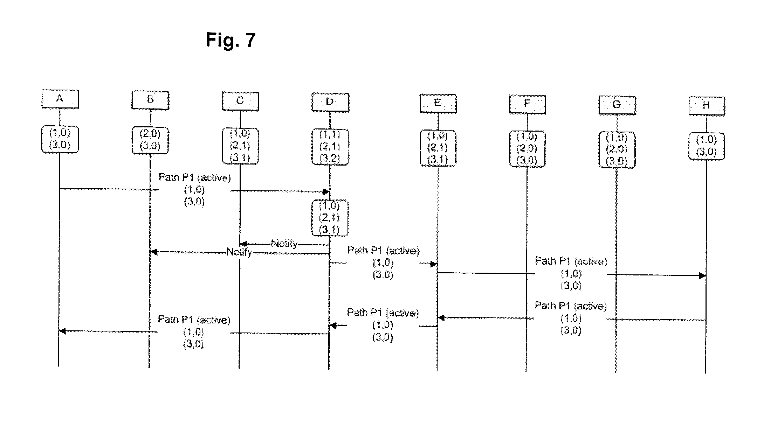

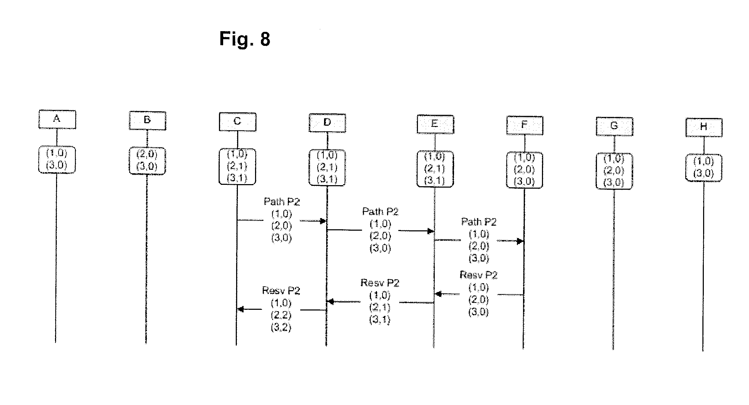

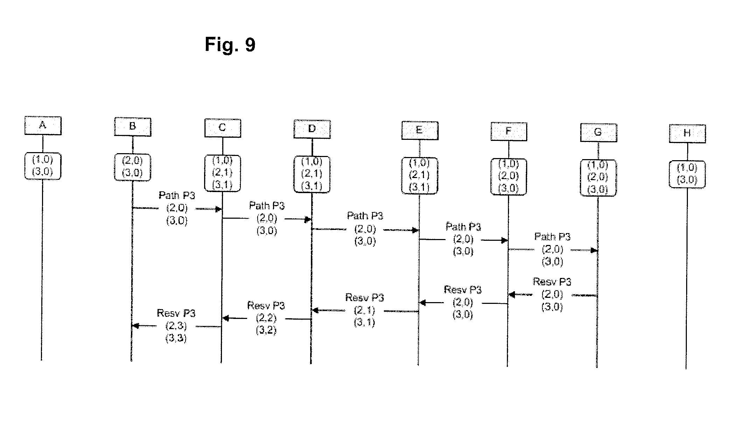

Below the detailed description of the scenario steps is provided:
1. Service 1 is configured at node A and enabled:
   a. The working connection (W1) is signaled using RSVP. This step is not affected by the invention (Figure 4).
   b. The backup connection (P1) is signaled using RSVP. The lambda list is carried on Path messages and updated on Resv messages. The nodes along the backup path build and update their local sharing information (Figure 4). The local sharing information at nodes A, D, E and H is updated with lambdas 1 and 3. The respective weights remain 0 as there is no sharing potential on the outgoing links.
2. Service 2 is configured at node C and enabled:
   a. The working connection (W2) is signaled using RSVP. This step is not affected by the invention (Figure 5).
   b. The backup connection (P2) is signaled using RSVP. The lambda list is carried on Path messages and updated on Resv messages. The nodes along the backup path build and update their local sharing information (Figure 5). The local sharing information at nodes C, D, E and F is updated with lambdas 1, 2 and 3. The weights for lambdas 1 and 3 are set to 1 on node D as they can be shared by P1 and P2 on the outgoing link. Node D updates the lambda list on the Resv message according to its local sharing information. In this example, the lambda list update consists of merging (by addition of weights) the incoming lambda list with the local sharing information.
   c. Optionally, nodes D and E which detect a change in their local sharing information, notify the ingress nodes of the affected LSPs (P1 in this case), i.e. node A. For this example, this option is not further detailed as it is covered below in step 5.
3. Service 3 is configured at node B and enabled:
   a. The working connection (W3) is signaled using RSVP. This step is not affected by the invention (Figure 6).
   b. The backup connection (P3) is signaled using RSVP. The lambda list is carried on Path messages and updated on Resv messages. The nodes along the backup path build and update their local sharing information (Figure 6). The local sharing information at nodes B, C, D, E, F and G is updated with lambdas 2 and 3. The weights for lambdas 2 and 3 are incremented by 1 on nodes C, D and E as they can be shared by P2 and P3 (for lambda 2) and by P1, P2 and P3 (for lambda 3), on the outgoing link. Nodes C, D and E update the lambda list on the Resv message according to their local sharing information.
   c. Optionally, nodes C, D, E and F which detect a change in their local sharing information, notify the ingress nodes of the affected LSPs (P1 and P2 in this case), i.e. nodes A and C. For this example, this option is not further detailed as it is covered below in step 5.
4. If a transport plane failure occurs on W1, ingress node A is notified (via RSVP Notify message) and activates P1 according to the procedures in RFC4872 (Figure 7). During P1 activation, transit node D (and possibly E) detects that the shared lambda x is no longer available for P2 and P3 and notifies (via RSVP Notify message with error code/value "backup LSP resource unavailable") the respective ingress nodes C and B, also according to the procedures in RFC4872 (Figure 7). Furthermore, the local sharing information weights for lambdas 1 and 3 are decremented by 1 on node D as they can no longer be shared with P1 (which is now active) on the outgoing link. The lambda list is not updated on the Resv message by any node as P1 is active and can not share resources. At this stage, lambda x is used by P1. P2 and P3 must have their lambdas re-assigned by their ingress nodes.
5. The reception of the RSVP Notify with error code/value "backup LSP resource unavailable" by ingress nodes C and B is the trigger to re-assign the lambda for P2 and P3 respectively.
   a. Ingress node C sends a Path downstream for P2 with the original lambda list, and receives the updated lambda list on the Resv (Figure 8). Node C re-signals P2 with the lambda with highest preference (lambda 2) from the received lambda list, using standard RSVP procedures.
   b. Ingress node B sends a Path downstream for P3 with the original lambda list, and receives the updated lambda list on the Resv (Figure 9). Node B re-signals P3 with the lambda with highest preference (lambda 2) from the received lambda list, using standard RSVP procedures. Lambda 2 is shared between P2 and P3 on the 3 links between nodes C-D, D-E and E-F.

Figures 4 to 9 show RSVP signaling flows of interest to the invention. Irrelevant details are omitted. The white soft-edged boxes show the local sharing information before and after (when applicable) signaling updates (empty boxes mean no information is present). For simplicity, the local sharing information is equivalent to the lambda list information in this example. The arrows show the RSVP Path and Resv messages along with the signaled lambda list. The lambda list is displayed as a list of the <lambda, weight> pair. For example, (1,2)(3,4) means that lambda 1 has weight 2, and lambda 3 has weight 4.

The present invention is not limited to the details of the above described principles. The scope of the invention is defined by the appended claims and all changes and modifications as fall within the equivalents of the scope of the claims are therefore to be embraced by the invention. Mathematical conversions or equivalent calculations of the signal values based on the inventive method or the use of analogue signals instead of digital values are also incorporated.

### List of Abbreviations:

- CAPEX:: Capital Expenditure
- GMPLS:: Generalized Multi Protocol Label Switching
- IETF:: Internet Engineering Task Force
- LSP:: Label Switch Path
- OCh:: Optical Channel
- OTN:: Optical Transport Network
- PPRO:: Primary Path Route Object
- RFC:: Request For Comments
- RSVP:: Resource Reservation Protocol
- SDH:: Synchronous Digital Hierarchy
- TDM:: Time Division Multiplex
- TE:: Traffic Engineering
- WDM:: Wavelength Division Multiplex

## Claims

1. A method for data communication networks, the data communication network including a label switch path, the method comprising:
providing a list including a plurality of entries, wherein each entry includes a wavelength that can be used by the label switch path for recovery procedures.

2. A method according to claim 1, wherein each entry further includes a plurality of parameters including the weight of the wavelength or the sharing degree of the wavelength or the status of the wavelength.

3. A method according to any of the preceding claims, wherein the list of entries is ordered in ascending order of preference.

4. A method according to claim 3, wherein the order of preference is generated by a planning tool or by a network operator.

5. A method according to any of the preceding claims, further comprising:
signaling each entry of the list in both upstream and downstream direction.

6. A method according to claim 5, wherein each entry is signaled during a path setup.

7. A method according to claim 5, wherein each entry is signaled periodically by means of refresh messages.

8. A method according to claim 5, wherein each entry is signaled upon specific network events, preferably during network failures.

9. A method according to any of the preceding claims, wherein a network operator generates the list.

10. A method according to any of the preceding claims, further comprising:
updating the list.

11. A method according to claim 10, wherein the order of the plurality of entries is updated.

12. A method according to claim 10, wherein a parameter included in one entry of the plurality of entries is updated.

13. A system for data communication networks, comprising:
a label switch path;
means for generating a list including a plurality of entries, wherein each entry includes a wavelength that can be used by the label switch path for recovery procedures.
